# EUROPÄISCHE PATENTSCHRIFT

(11) **EP 4 257 835 B1**
(45) Veröffentlichungstag und Bekanntmachung des Hinweises auf die Patenterteilung: **16.07.2025**
(21) Anmeldenummer: 23166957.3
(22) Anmeldetag: 06.04.2023
(51) Int. Cl.: F16B 45/06, F16B 45/00, F16G 11/00

(54) **HAKENVERBINDUNGSEINHEIT, VERWENDUNG EINES HAKENVERBINDUNGSTEILS UND HAKENVERBINDUNGSBAUGRUPPE**
HOOK CONNECTION UNIT, USE OF HOOK CONNECTION PART, AND HOOK CONNECTION ASSEMBLY
UNITÉ DE LIAISON À CROCHETS, UTILISATION D'UNE PIÈCE DE LIAISON À CROCHETS ET ENSEMBLE DE LIAISON À CROCHETS

(30) Priorität: 07.04.2022 DE 102022108400
(43) Veröffentlichungstag der Anmeldung: 11.10.2023
(73) Patentinhaber: Ostfalia Hochschule Für Angewandte Wissenschaften Hochschule Braunschweig/Wolfenbüttel, 38302 Wolfenbüttel (DE)
(72) Erfinder: Bolze, Klaus, 38159 Vechelde (DE)
(74) Vertreter: REHBERG HÜPPE + PARTNER

(56) Entgegenhaltungen:
- CA-A1- 2 415 874
- US-A1- 2018 216 700
- US-B1- 9 528 655
- ANONYMOUS: "Fused filament fabrication", WIKIPEDIA, THE FREE ENCYCLOPEDIA, 14 December 2018 (2018-12-14), XP055869491, Retrieved from the Internet <URL:https://en.wikipedia.org/wiki/Fused_filament_fabrication> [retrieved on 20211206]

## Beschreibung

### TECHNISCHES GEBIET DER ERFINDUNG

Die Erfindung betrifft eine Hakenverbindungseinheit, eine Verwendung eines Hakenverbindungsteils und eine Hakenverbindungsbaugruppe.

### STAND DER TECHNIK

US 9 528 655 B1 offenbart ein Hakenverbindungsteil, welches die Form einer "2" hat. Hierbei bildet die obere Hälfte des Hakenverbindungsteils einen Haken, während der geradlinige, horizontale Schenkel des unteren Teils des "2"-förmigen Hakenverbindungsteils in beiden Endbereichen jeweils eine Anschlagöse aufweist. Der Haken kann beispielsweise in eine Öse einer Bootsplane eingehängt werden, die dann gespannt werden kann, indem eine durch beide Anschlagösen geführte Spannleine eine Zugkraft erzeugt. Möglich ist auch, dass lediglich ein Zugseil an dem Hakenverbindungsteil angreift, wobei dann die beiden Anschlagösen für die Verknotung des Zugseils mit dem Hakenverbindungsteil genutzt werden können.

CA 2 415 874 A1 offenbart Hakenverbindungsteile, welche ein gekrümmtes Hakenteil und eine sich davon ausgehend geradlinig erstreckende Verlängerung aufweisen, die bei Verbindung zweier Hakenverbindungsteile zu der Form einer Zange als Zangenhebel genutzt werden kann. Der Zangenhebel ermöglicht eine Betätigung der Hakenteile aus der Ferne. Zudem kann der Zangenhebel ein Durchgangsloch zum Durchführen eines Zugseiles aufweisen, um die Hakenteile mittels eines Seilzuges zu betätigen.

### AUFGABE DER ERFINDUNG

Der Erfindung liegt die Aufgabe zugrunde, eine Hakenverbindungseinheit vorzuschlagen, die hinsichtlich
- der Herstellung und/oder
- der Benutzung und/oder
- der Sicherheit und/oder
- multifunktionaler Einsatzmöglichkeiten
verbessert ist. Des Weiteren liegt der Erfindung die Aufgabe zugrunde, eine entsprechend verbesserte Verwendung eines Hakenverbindungsteils sowie eine entsprechend verbesserte Hakenverbindungsbaugruppe vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung beruht insbesondere auf der Erkenntnis, dass aus dem Stand der Technik einerseits sogenannte "Rigging-Platten" und andererseits Verbindungshaken bekannt sind:
- Rigging-Platten dienen der zentralen Verbindung beispielsweise von Seilen, Drähten, Ketten, Schlingen (im Folgenden als biegeweiches, nur eine Zugkraft übertragendes "Zugmittel" zusammengefasst). Rigging-Platten sind üblicherweise aus Edelstahlplatten oder Aluminiumplatten hergestellt, in denen mittels Bohrungen mehrere Ösen vorgesehen sind, an welchen die Zugmittel angeschlagen werden können. Sollen die Zugmittel vor der praktischen Anwendung ohne auf diese wirkende Zugkräfte an den Ösen angeschlagen werden, können die Ösen als Bohrungen der Rigging-Platte mit randgeschlossenem Querschnitt der Öse ausgebildet sein, so dass das nicht gespannte Zugmittel in Richtung der Längsachse der Bohrung in die randgeschlossene Bohrung eingeführt und durch diese hindurchgeführt werden kann. Soll eine Herstellung der Verbindung mit der Öse aber in einem Zustand des Zugmittels erfolgen, indem bereits eine mechanische Beanspruchung des Zugmittels durch eine Zugkraft erfolgt, womit ein Einfädeln des Zugmittels in die Öse nicht möglich ist, muss die Öse eine Randöffnung aufweisen, über welche Zugmittel in die Öse eingeführt werden kann. Möglich ist, dass nach dem Einführen die Randöffnung mittels eines beispielsweise federbeaufschlagten Schließelements verschlossen wird.

Ein Beispiel einer derartigen Rigging-Platte ist aus der Druckschrift US 6,336,260 B1 bekannt. Hier kann nach einem Einführen eines Zugmittels durch eine Randöffnung einer Öse der Rigging-Platte die Randöffnung durch einen Schließhebel geschlossen werden. Der Schließhebel ist auf einer Seite der Randöffnung verschwenkbar an einem Grundkörper der Rigging-Platte angelenkt und greift in der Schließstellung in dem anderen Endbereich auf der anderen Seite der Randöffnung in einen Haken des Grundkörpers ein. Zur Sicherung der Schließstellung kann der Schließhebel zwei über eine Gewindehülse verbundene Gewindestangen aufweisen. Mittels einer Verdrehung der Hülse kann der Einschraubwinkel der Gewindestangen in der Hülse verändert werden, womit die Länge des Schließhebels verändert wird und der Schließhebel zur Sicherung der Schließstellung mit dem Haken der Rigging-Platte verspannt wird.

Rigging-Platten finden beispielsweise Einsatz in Outdoor-Anwendungen, insbesondere im professionellen Klettersport. Rigging-Platten im professionellen Klettersport schaffen sogenannte Multi-Anker-Systeme, die eine Verbindung einer Vielzahl von Seilen an einem einzigen Anker-System, welches von der Rigging-Platte bereitgestellt wird, ermöglichen. Besonders für komplexe Seilaufbauten sind Rigging-Platten unerlässlich. Weitere, nicht beschränkende Beispiele für den Einsatz von Rigging-Platten sind die Nutzung durch Personal für die Baumpflege, durch Industriekletterer sowie für Rettungseinsätze.
- Andererseits sind Verbindungshaken und sonstige Haken bekannt, die im Alltag vielfältige unterschiedliche Anwendungen haben, beispielsweise Angelhaken, Kranhaken, Karabinerhaken, Verbindungshaken für Kleiderbügel, Duschvorhänge, Klapptische, Regale, Seile oder Ketten.

Technische Verbindungshaken werden beispielsweise auf der Internet-Seite www.thecrosbygroup.com/products/chain-and-components/crosbykuplex/hooks/self-Iocking-hooks/ (Datum der Einsichtnahme 09.03.2022).
angeboten. Diese Verbindungshaken verfügen über ein ungefähr C-förmiges Hakenverbindungsteil, an dessen Endbereich in einem Schwenklager ein Hebel angelenkt ist. Der Hebel verfügt auf einer Seite der Schwenkachse über ein Hebelteil mit einer Öse, an der ein Zugmittel angeschlagen werden kann. Auf der anderen Seite der Schwenkachse weist der Hebel ein Schließteil auf, welches in einer Schließstellung die Randöffnung des C-förmigen Hakenverbindungsteils verschließt, womit eine randgeschlossene Hakenöse gebildet ist. Wird der Verbindungshaken einerseits durch das an der Öse angeschlagene Zugmittel und andererseits durch einen Gegenstand, der an dem Hakenverbindungsteil abgestützt ist, mit einer Zugkraft beaufschlagt, nimmt das Schließteil automatisch eine Schließstellung ein. Die Schließstellung ist dabei durch die auf den Verbindungshaken wirkende Kraft gesichert, was auch als Selbstsicherung bezeichnet wird.

Erfindungsgemäß wird erstmals eine Hakenverbindungseinheit vorgeschlagen, die alternativ oder kumulativ die Funktion einer Rigging-Platte einerseits und eines Verbindungshakens andererseits gewährleisten kann (ohne dass die Erfindung auf die Gewährleistung dieser Funktionen eingeschränkt ist).

Die erfindungsgemäße Hakenverbindungseinheit weist zwei Hakenverbindungsteile auf. Die Hakenverbindungsteile weisen wiederum jeweils einen Haken auf. Die Hakenverbindungsteile können zur Bildung der Hakenverbindungseinheit aufeinander angeordnet werden. Die Anordnung der Hakenverbindungsteile aufeinander erfolgt dabei derart, dass die beiden Haken der Hakenverbindungsteile eine randgeschlossene Hakenöse bilden. Somit ist möglich, dass vor dieser Anordnung der Hakenverbindungsteile aufeinander ein Gegenstand oder ein Zugmittel durch die jeweilige Randöffnung der Haken in die Haken eingeführt wird. Sind dann die Hakenverbindungsteile aufeinander angeordnet, bilden die Haken die randgeschlossene Hakenöse, womit der Gegenstand oder das Zugmittel die Hakenöse nicht mehr verlassen kann, so dass das Zugmittel oder der Gegenstand sicher mit der Hakenverbindungseinheit verbunden ist.

Des Weiteren bilden in dem Montagezustand der Hakenverbindungseinheit, in dem die beiden Hakenverbindungsteile aufeinander angeordnet sind und die Haken die randgeschlossene Hakenöse bilden, zwei Anschlagösen der Hakenverbindungsteile und die von den Haken gebildete Hakenöse ein Dreieck. Das Dreieck kann ein gleichschenkliges Dreieck sein, bei dem sich die gleichen Schenkel jeweils von der Hakenöse zu einer der Anschlagösen erstrecken. Möglich ist auch, dass das Dreieck ein gleichseitiges Dreieck ist. An den Anschlagösen der Hakenverbindungsteile kann dann beispielsweise ein Zugmittel angeschlagen werden, wobei vorzugsweise dasselbe Zugmittel durch beide Anschlagösen hindurchgeführt ist. Mittels des Zugmittels werden die beiden Hakenverbindungsteile miteinander verbunden und die Montagestellung, in der die Haken die randgeschlossene Hakenöse bilden, wird durch das Zugmittel gesichert. Vorzugsweise ist die Hakenverbindungseinheit auf diese Weise selbstsichernd ausgebildet, so dass die Randschließung der Hakenöse hervorgerufen und/oder verstärkt wird, wenn auf die Hakenöse einerseits und auf die Anschlagösen andererseits eine Zugkraft wirkt. Die von den Haken gebildete randgeschlossene Hakenöse kann dabei ebenfalls ein Zugmittel aufnehmen, womit die Hakenverbindungseinheit eine Art Rigging-Platte bildet. Durchaus möglich ist aber auch, dass die Hakenöse zur Aufnahme eines Karabiners oder eines beliebigen anderen Hakens, einer Öse oder eines Gegenstands dient, der durch die Hakenverbindungseinheit und durch das an den Anschlagösen angeschlagene Zugmittel gehalten werden soll.

Im Rahmen der Erfindung können die Hakenverbindungsteile eine beliebige Geometrie und Gestaltung aufweisen. Für einen Vorschlag der Erfindung sind die Hakenverbindungsteile plattenförmig ausgebildet, so dass die Hakenverbindungsteile auch aus plattenförmigen Halbzeugen hergestellt sein können. Möglich ist auch, dass plattenförmige Hakenverbindungsteile in einem Spritzgussverfahren oder einem anderen Verfahren hergestellt werden. Die plattenförmige Ausgestaltung der Hakenverbindungsteile kann eine kompakte Anordnung und Stapelung derselben zur Bevorratung gewährleisten. Andererseits ermöglicht die plattenförmige Ausgestaltung der Hakenverbindungsteile, dass die Hakenverbindungsteile in der montierten Stellung großflächig aneinander anliegen, was für eine gute Sicherung der Hakenverbindungsteile aneinander und die Erzeugung kleiner Flächenpressungen und damit der Bereitstellung einer erhöhten Festigkeit sorgt.

Grundsätzlich können die beiden Hakenverbindungsteile unterschiedlich voneinander ausgebildet sein. Für einen besonderen Vorschlag der Erfindung sind die Hakenverbindungsteile identisch ausgebildet, was bspw. deren Bevorratung vereinfacht und die Zahl der Gleichteile erhöht und die Herstellungskosten verringert.

Für den Fall, dass die Hakenverbindungsteile identisch ausgebildet sind, sind in der montierten Hakenverbindungseinheit ein erstes Hakenverbindungsteil in einem Zustand auf dem zweiten Hakenverbindungsteil angeordnet, in dem das erste Hakenverbindungsteil im Vergleich zu dem zweiten Hakenverbindungsteil um 180° um die Längsachse gewendet ist. Infolge dieser Wendung kann die Randöffnung des Hakens des ersten Hakenverbindungsteils [und entsprechend die Randöffnung des Hakens des zweiten Hakenverbindungsteils] durch den Haken des zweiten Hakenverbindungsteils [und entsprechend durch den Haken des ersten Hakenverbindungsteils] geschlossen werden, so dass auf diese Weise die randgeschlossene Hakenöse gebildet werden kann.

Erfindungsgemäß ist die Hakenverbindungseinheit in einer Draufsicht Y-förmig oder T-förmig ausgebildet. Die Y-Form und die T-Form verfügen dann jeweils über einen Vertikalschenkel sowie zwei Seitenschenkel, wobei für die Y-Form die Seitenschenkel einen beliebigen Winkel kleiner 180°einschließen können, während für die T-Form die Seitenschenkel einen Winkel von ungefähr 180° aufweisen. In diesem Fall sind die Haken und die Hakenösen im Bereich des Vertikalschenkels des Y oder T angeordnet, während die Anschlagösen jeweils im Bereich eines Seitenschenkels des Y oder T angeordnet sind. Diese Ausgestaltung führt zu einer besonders vorteilhaften Beanspruchung der Hakenverbindungseinheit mit den im Betrieb beaufschlagenden Kräften. Da die Anschlagösen im (vorzugsweise außenliegenden) Bereich der Seitenschenkel angeordnet sind, haben diese hinsichtlich der Vertikal- oder Längsachse der Hakenverbindungseinheit einen verhältnismäßig großen Abstand. Dies hat zur Folge, dass auf die Anschlagösen wirkende Kräfte zu einer großen (Selbst-)Sicherungskraft für die Haken zur Bereitstellung und Aufrechterhaltung der randgeschlossenen Hakenöse führen. Andererseits kann über diesen verhältnismäßig großen Abstand der Anschlagösen auch eine sehr stabile Gewährleistung der Ausrichtung der Hakenverbindungseinheit bei der Beaufschlagung derselben mit den im Betrieb wirkenden äußeren Kräften gewährleistet werden.

Erfindungsgemäß weist die Hakenverbindungseinheit im Übergangsbereich von den Seitenschenkeln des Y oder T zu dem Vertikalschenkel des Y oder T eine Verbindungsöse auf. Diese Verbindungsöse kann zu unterschiedlichen Zwecken genutzt werden:
Ein Zugmittel kann zunächst von einer Hinterseite durch die fluchtenden ersten Anschlagösen der beiden Hakenverbindungsteile hindurchgeführt wird, auf der Vorderseite der Hakenverbindungsteile von den ersten Anschlagösen zu den fluchtenden Verbindungsösen geführt wird, das Zugmittel dann durch die Verbindungsösen von der Vorderseite auf die Rückseite geführt wird, das Zugmittel dann von den Verbindungsösen zu den zweiten fluchtenden Anschlagösen geführt wird und von der Hinterseite durch die zweiten Anschlagösen auf die Vorderseite der Hakenverbindungsteile geführt wird. Das Zugmittel ist somit für diese Ausführungsform dreimal durch die Hakenverbindungsteile hindurchgeführt, wobei das Zugmittel von außen auf der Rückseite zu den ersten Anschlagösen zugeführt wird, während dieses dann auf der Vorderseite wieder von den zweiten Anschlagösen nach außen gelangt. Eine derartige Aufbringung der Zugkräfte durch das Zugmittel auf die Hakenverbindungseinheit auf unterschiedlichen Seiten der Hakenverbindungseinheit hat sich im Betrieb zur Gewährleistung einer stabilen Stellung der Hakenverbindungseinheit unter Last als vorteilhaft herausgestellt. Andererseits führen die auf das Zugmittel wirkenden Zugkräfte und die Anlage des Zugmittels einerseits zwischen den ersten Anschlagösen und den Verbindungsösen auf der Vorderseite sowie andererseits zwischen den Verbindungsösen und den zweiten Anschlagösen auf der Rückseite dazu, dass das Zugmittel von beiden Seiten eine Anpresskraft auf die Hakenverbindungsteile ausübt, mit welcher die Hakenverbindungsteile aneinander gepresst werden. Auf diese Weise und mit der erzeugten Reibkraft zwischen den Hakenverbindungsteilen kann die montierte Stellung der Hakenverbindungseinheit mit der randgeschlossenen Hakenöse selbstsichernd aufrechterhalten werden.

Für die erfindungsgemäß eingesetzten Hakenverbindungsteile gelten kumulativ die folgenden Bedingungen:
a) Die Hakenverbindungsteile weisen jeweils im Bereich des Vertikalschenkels des Y oder T einen Haken aufn.
b) Die Hakenverbindungsteile weisen jeweils im Bereich der Seitenschenkel des Y oder T eine Anschlagöse auf.
c) Die Hakenverbindungsteile weisen jeweils im Übergangsbereich von den Seitenschenkeln des Y oder T zu dem Vertikalschenkel des Y oder T eine Verbindungsöse auf.

Die Hakenverbindungsteile der Hakenverbindungseinheit können im Rahmen der Erfindung aus einem beliebigen Material, insbesondere einem metallischen Material (beispielsweise Stahl oder Aluminium oder Titan in beliebiger Zusammensetzung und Legierung) hergestellt sein. Zum Einsatz kommen können auch beliebige Verbundmaterialien oder geschichtete Materialien. So ist bspw. auch möglich, dass die Hakenverbindungsteile zumindest im Bereich ihrer Kontaktflächen in der montierten Stellung eine Beschichtung aufweisen, die die Reibkraft erhöht, womit die Selbstsicherung der montierten Stellung erhöht werden kann. Für einen Vorschlag der Erfindung sind die Hakenverbindungsteile aus einem (vorzugsweise thermoplastischen) Kunststoffmaterial hergestellt.

Eine Fertigung der Hakenverbindungsteile kann aus Halbzeugen in Form von Platten oder in einem Spritzgießverfahren erfolgen. Möglich ist, dass die Hakenverbindungsteile in unterschiedlichen skalierten Größen hergestellt werden, so dass dann auch Hakenverbindungseinheiten in unterschiedlichen skalierten Größen für die unterschiedlichen Einsatzfälle und wirkenden Kräfte bereitgestellt werden können.

Möglich ist auch, dass die Hakenverbindungsteile aus einem Kunststoffmaterial oder einem beliebigen anderen Material mittels eines additiven Verfahrens hergestellt sind. Im Rahmen der Erfindung kann auch eine beliebige Faserverstärkung für das Kunststoffmaterial Einsatz finden, wobei vorzugsweise die Fasern nicht orientiert oder entsprechend den Beanspruchungen orientiert in dem Kunststoffmaterial verlaufen.

Für einen besonderen Vorschlag der Erfindung sind die Hakenverbindungsteile in einem additiven FFF-Verfahren hergestellt. Hierbei handelt es sich um eine "Fused Filament Fabrication". Hinsichtlich Details zu dem FFF-Verfahren wird auf die Veröffentlichung
Gao et al., Fused filament fabrication of polymer materials: A review of interlayer bond, Additive Manufacturing 37 (2021) 101658
verwiesen.

Eine weitere Lösung der der Erfindung zugrunde liegenden Aufgabe stellt eine Verwendung eines Hakenverbindungsteils dar. Das Hakenverbindungsteil ist, wie auch zuvor erläutert, Y- oder T-förmig ausgebildet. Das Hakenverbindungsteil weist im Bereich des Vertikalschenkels des Y oder T einen Haken auf, im Bereich der Seitenschenkel des Y oder T eine Anschlagöse auf und im Übergangsbereich von den Seitenschenkeln des Y oder T zu dem Vertikalschenkel des Y oder T eine Verbindungsöse auf. Die Erfindung schlägt vor, ein Hakenverbindungsteil entsprechend dieser Ausgestaltung zu verwenden zur Bildung einer Hakenverbindungseinheit, wie diese zuvor erläutert worden ist.

Eine weitere Lösung der der Erfindung zugrunde liegenden Aufgabe stellt eine Hakenverbindungsbaugruppe dar. Diese Hakenverbindungsbaugruppe ist einerseits mit einer Hakenverbindungseinheit gebildet, wie diese zuvor erläutert worden ist, sowie mit einem Zugmittel. In diesem Fall ist für die Montage der Hakenverbindungseinheit das Zugmittel durch Anschlagösen und die fluchtend angeordneten Verbindungsösen der Hakenverbindungsteile geführt (vgl. auch die zuvor beschriebenen Richtungen der Durchführung des Zugmittels durch die Anschlagösen und Verbindungsösen).

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Hakenverbindungsteil einer Ausführungsform I in einer Vorderansicht.
- **Fig. 2**: zeigt das Hakenverbindungsteil gemäß Fig. 1 in einer Seitenansicht.
- **Fig. 3**: zeigt zwei relativ um 180° um eine Längsachse gewendete, aufeinander aufliegende Hakenverbindungsteile mit fluchtenden Anschlagösen und Verbindungsösen sowie randgeschlossener Hakenöse in einer Vorderansicht.
- **Fig. 4**: zeigt eine Hakenverbindungsbaugruppe in einer Vorderansicht mit einer Hakenverbindungseinheit gemäß Fig. 3 und einem durch die Anschlagösen und die Verbindungsöse hindurchgeführten Zugmittel.
- **Fig. 5**: zeigt eine Ausführungsform II eines Hakenverbindungsteils in einer Vorderansicht.

### FIGURENBESCHREIBUNG

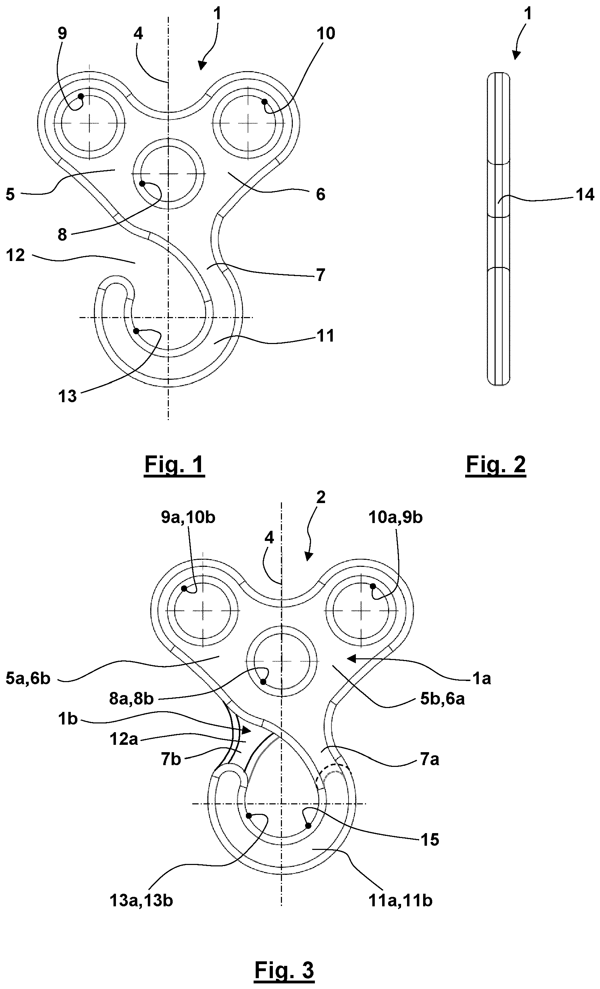

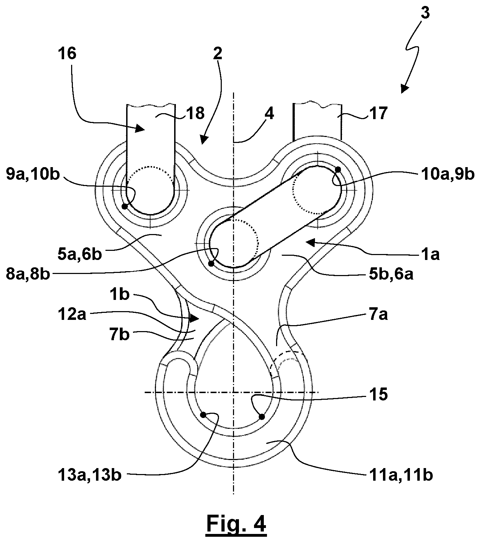

**Fig. 1 bis 4** zeigen eine Ausführungsform eines Hakenverbindungsteils 1 (Fig. 1 und 2), einer Hakenverbindungseinheit 2 (Fig. 3) und einer Hakenverbindungsbaugruppe 3 (Fig. 4).

Das Hakenverbindungsteil 1 verfügt über eine Längsachse 4. Gemäß Fig. 1 verfügt das Hakenverbindungsteil 1 in grober Näherung über eine Y-Form mit zwei Seitenschenkeln 5, 6 und einem Vertikalschenkel 7. Im Verbindungsbereich der Seitenschenkel 5, 6 mit dem Vertikalschenkel 7 verfügt das Hakenverbindungsteil 1 über eine Verbindungsöse 8. In den ausliegenden Endbereichen bilden die Seitenschenkel 5, 6 jeweils eine Anschlagöse 9, 10 aus. Zwischen den Anschlagösen 9, 10 und der Verbindungsöse 8 sind die Seitenschenkel 5, 6 ungefähr geradlinig ausgebildet, wobei diese auch kurvenförmig oder beliebig abgewinkelt oder gekröpft ausgebildet sein können.

Der Vertikalschenkel 7 ist als Haken 11 ausgebildet. Der Haken 11 verfügt über ein Kreisringsegment und bildet eine Randöffnung 12 aus. Abseits der Randöffnung 12 bildet der Haken 11 innenliegend einen Ösenrand 13 aus.

Das Hakenverbindungsteil 1 kann aber auch eine beliebige andere Geometrie aufweisen, die im Rahmen der Erfindung auch als Y-förmig oder T-förmig angesehen wird, sofern einerseits die Verbindungsstrecke zwischen dem Zentrum des Hakens 11 oder des Ösenrandes 13 mit der Verbindungsöse 8 und die Verbindungsstrecken der Zentren der Verbindungsöse 8 mit den Zentren der Anschlagösen 9, 10 Y-förmig oder T-förmig angeordnet sind.

Wie in Fig. 2 zu erkennen ist, ist das Hakenverbindungsteil 1 als Platte 14 ausgebildet, wobei möglich ist, dass (wie dargestellt) die äußeren Ränder, die Verbindungsöse 8 und die Anschlagösen 9, 10 (im Folgenden auch zusammen "Ösen 8, 9, 10") abgerundet sind.

In Fig. 3 sind zwei identische Hakenverbindungsteile 1 aufeinandergelegt, wobei diese durch den ergänzenden Buchstaben a, b voneinander unterschieden sind. Hierbei ist das Hakenverbindungsteil 1b gegenüber der Ausrichtung in Fig. 1 um 180° um die Längsachse 4 gewendet, während das Hakenverbindungsteil 1a in der Ausrichtung gemäß Fig. 1 auf das Hakenverbindungsteil 1b aufgelegt ist. Die Hakenverbindungsteile 1a, 1b liegen damit bis auf den Bereich der Randöffnungen 12a, 12b vollflächig aneinander an. Die Ösen 8, 9, 10 sind fluchtend zueinander angeordnet. Die Randöffnung 12a des Hakenverbindungsteils 1a ist geschlossen durch den Haken 11b des anderen Hakenverbindungsteils 1b. Entsprechend ist die Randöffnung 12b des Hakenverbindungsteils 1b geschlossen durch den Haken 11a des Hakenverbindungsteils 1a. Die Ösenränder 13a, 13b der Haken 11a, 11b ergänzen sich zu einer randgeschlossenen Hakenöse 15. Die Hakenöse 15 wird somit gemeinsam von den beiden Haken 11a, 11b der Hakenverbindungsteile 1a, 1b begrenzt.

In Fig. 4 ist ein Zugmittel 16, insbesondere ein Seil, durch die Ösen 8, 9, 10 hindurchgeführt. Hierzu ist das Zugmittel 16 zunächst von einer Rückseite durch die Anschlagösen 9b, 10a der Hakenverbindungsteile 1a, 1b nach vorne geführt und auf der Vorderseite zu den Verbindungsösen 8a, 8b und durch diese hindurch wieder nach hinten geführt. Auf der Rückseite erstreckt sich dann das Zugmittel 16 von den Verbindungsösen 8a, 8b zu den Anschlagösen 10b, 9a, wo das Zugmittel 16 dann durch die Anschlagösen 10b, 9a wieder nach vorne geführt ist. Ein Zugmittelabschnitt 17 des Zugmittels 16, der auf der Rückseite den Anschlagösen 9b, 10a von außen zugeführt ist, und ein Zugmittelabschnitt 18 des Zugmittels 16, der auf der Vorderseite aus den Anschlagösen 10b, 9a austritt und sich nach außen erstreckt, sind für das dargestellte Ausführungsbeispiel parallel zueinander orientiert, aber um die Dicke der Hakenverbindungseinheit 2 vertikal zur Zeichenebene gemäß Fig. 4 zueinander versetzt.

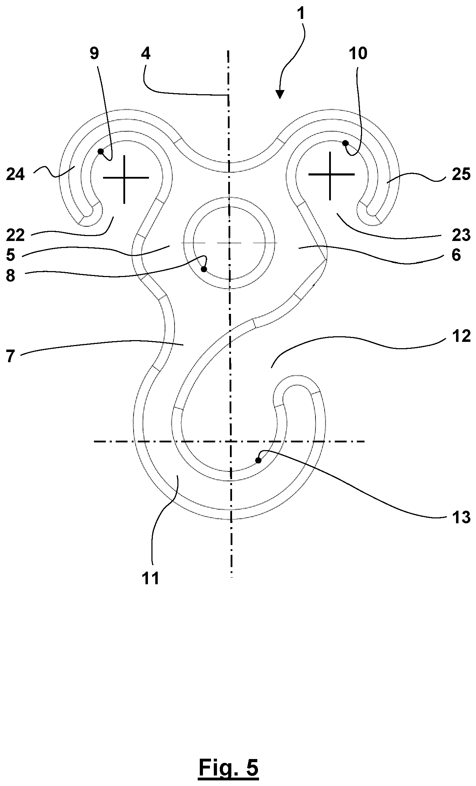

**Fig. 5** zeigt ein Ausführungsbeispiel II eines Hakenverbindungsteils 1, welches grundsätzlich dem Ausführungsbeispiel gemäß Fig. 1 und 2 entspricht und entsprechend Fig. 3 und 4 verwendet werden kann. Allerdings sind gemäß Fig. 5 die Anschlagösen 9, 10 nicht randgeschlossen ausgebildet. Vielmehr verfügen die Anschlagösen 9, 10 über jeweils eine Randöffnung 22, 23. Hierbei sind die Randöffnungen 22, 23 derart bemessen, dass durch die Randöffnungen 22, 23 seitlich das Zugmittel 16 in die Anschlagösen 9, 10 eintreten kann. Für das dargestellte Ausführungsbeispiel werden die Anschlagösen 9, 10 (abseits der Randöffnungen 22, 23) begrenzt durch den Vertikalschenkel 7 und teilkreisringförmige Stege 24, 25, die sich für das dargestellte Ausführungsbeispiel mit einem Umfangswinkel im Bereich von 160° bis 200° um die Anschlagöse 9, 10 erstrecken. Die Stege 24, 25 verfügen vorzugsweise über einen konstanten Querschnitt.

Sofern hier von einem Zugmittel 16 gesprochen ist, kann dies ein Seil, ein Draht, eine Kette, oder ein Schlinge sein, welches/welcher/welche durch die Anschlagöse 9, die Anschlagöse 10 und die Verbindungsöse 8 und/oder die Hakenöse 15 hindurchgeführt ist.

An den Haken 11 und in der Hakenöse 15 kann bspw. ein anders Zugmittel, ein Haken, ein Gegenstande (beispielsweise Trinkflaschen, eine Tasche oder ein Beutel) u. Ä. befestigt oder eingehakt werden zur Herstellung der gewünschten Verbindung. Ein Öffnen der Hakenöse 15 ist lediglich möglich, wenn die Beanspruchung der Ösen beseitigt wird.

Die erfindungsgemäße Hakenverbindungseinheit 2 kann auch für eine Verbindung im Bereich von Fahrrädern, im Outdoor-Bereich oder im Campingbereich vorgesehen werden. Möglich ist, dass ein plattenförmiges Halbzeug (insbesondere aus Kunststoff, Holz, Metall oder einem Verbundwerkstoff) für die Herstellung der Hakenverbindungsteile 1 verwendet wird. Die Fertigung der Hakenverbindungsteile 1 kann bspw. unter Einsatz eines mechanischen oder trennenden Verarbeitungsverfahrens, beispielsweise eines fräsenden Verfahrens, erfolgen.

Weitere Einsatzfälle der Hakenverbindungseinheit 2 sind die schnelle und unkomplizierte Verbindung von Gegenständen und/oder die Anbindung an Gegenstände. Beispiele sind das Einhaken, Verbinden und/oder Befestigen von Trinkflachen, Beuteln, kleineren Taschen und ähnlichen Gegenständen an Fahrrädern, Gürteln, Taschen und Rucksäcken.

Eine Herstellung der Hakenverbindungsteile 1 ist in einfachen Werkzeugen im Urformverfahren oder durch trennende Verfahren (Fräsen, Bohren, Schneiden, ...) aus flächigen oder plattenförmigen Halbzeugen möglich.

Eine Verbindung der Hakenverbindungsteile 1 erfolgt vorzugsweise ausschließlich über Zugmittel und/oder ohne zusätzliche Verbindungselemente wie starre Achskörper, Bolzen, Muttern, Splinte, Federelemente u. ä. Es sind auch außer des Ein- und Hindurchfädelns des Zugmittels keine zusätzlichen Fertigungs- und/oder Montageschritte erforderlich.

In der vorliegenden Beschreibung und in den Patentansprüchen sind die beide Hakenverbindungsteile 1, mit welchen eine Hakenverbindungseinheit 2 gebildet ist, durch den zusätzlichen Buchstaben a, b voneinander unterschieden. Die entsprechende Kennzeichnung durch die Buchstaben a, b ist auch dann für die Teilmerkmale der Hakenverbindungsteile 1a, 1b verwendet worden. Auf diese Hakenverbindungsteile 1 sowie Teilmerkmale kann dann auch ohne die Verwendung des zusätzlichen Buchstabens a, b Bezug genommen werden, womit dann eines der beiden Hakenverbindungsteile oder Teilmerkmale oder beide Hakenverbindungsteile oder Teilmerkmale gemeint sein können.

Möglich ist im Rahmen der Erfindung auch, dass mindestens ein Zugmittel nicht unmittelbar an den Ösen 8, 9, 10 und/oder 15 angeschlagen ist. Vielmehr kann das Zugmittel auch über ein Anschlagmittel wie einen Karabiner an der Öse 8, 9, 10 oder 15 angeschlagen sein.

### BEZUGSZEICHENLISTE

- 1: Hakenverbindungsteil
- 2: Hakenverbindungseinheit
- 3: Hakenverbindungsbaugruppe
- 4: Längsachse
- 5: Seitenschenkel
- 6: Seitenschenkel
- 7: Vertikalschenkel
- 8: Verbindungsöse
- 9: Anschlagöse
- 10: Anschlagöse
- 11: Haken
- 12: Randöffnung
- 13: Ösenrand
- 14: Platte
- 15: Hakenöse
- 16: Zugmittel
- 17: Zugmittelabschnitt
- 18: Zugmittelabschnitt
- 22: Randöffnung
- 23: Randöffnung
- 24: Steg
- 25: Steg

## Patentansprüche

1. Hakenverbindungseinheit (2) mit zwei Hakenverbindungsteilen (1), die jeweils einen Haken (11) aufweisen, wobei die Hakenverbindungsteile (1) derart gestaltet sind, dass diese zur Bildung der Hakenverbindungseinheit (2) so aufeinander angeordnet werden können, dass
a) die Haken (11) eine randgeschlossene Hakenöse (15) bilden und
b) zwei Anschlagösen (8,9) der Hakenverbindungsteile (1) und die Hakenöse (15) ein Dreieck bilden,
**dadurch gekennzeichnet, dass**
c) die Hakenverbindungsteile (1) jeweils Y- oder T-förmig ausgebildet sind und
d) die Hakenverbindungsteile (1)
da) jeweils im Bereich des Vertikalschenkels (7) des Y oder T den Haken (11) aufweisen und
db) jeweils im Bereich der Seitenschenkel (5, 6) des Y oder T eine Anschlagöse (9, 10) aufweisen und
dc) jeweils im Übergangsbereich von den Seitenschenkeln (5, 6) des Y oder T zu dem Vertikalschenkel (7) des Y oder T eine Verbindungsöse (8) aufweisen.

2. Hakenverbindungseinheit (2) nach Anspruch 1, **dadurch gekennzeichnet, dass** die Hakenverbindungsteile (1) plattenförmig ausgebildet sind.

3. Hakenverbindungseinheit (2) nach einem der vorhergehenden Ansprüche, **dadurch gekennzeichnet, dass** die Hakenverbindungsteile (1) identisch ausgebildet sind.

4. Hakenverbindungseinheit (2) nach Anspruch 3, **dadurch gekennzeichnet, dass** in der Hakenverbindungseinheit (2) ein erstes Hakenverbindungsteil (1a) in einem Zustand auf dem zweiten Hakenverbindungsteil (1b) angeordnet ist, in dem das erste Hakenverbindungsteil (1a) im Vergleich zu dem zweiten Hakenverbindungsteil (1b) um 180° um eine Längsachse (4) gewendet ist.

5. Hakenverbindungseinheit (2) nach einem der vorhergehenden Ansprüche, **dadurch gekennzeichnet, dass** die Hakenverbindungsteile (1) aus einem thermoplastischen Kunststoffmaterial hergestellt sind.

6. Hakenverbindungseinheit (2) nach einem der vorhergehenden Ansprüche, **dadurch gekennzeichnet, dass** die Hakenverbindungsteile (1) in einem additiven FFF-Verfahren hergestellt sind.

7. Verwendung eines Hakenverbindungsteils (1), welches Y- oder T-förmig ausgebildet ist und im Bereich des Vertikalschenkels (7) des Y oder T einen Haken (11) aufweist, im Bereich der Seitenschenkel (5, 6) des Y oder T eine Anschlagöse (9, 10) aufweist und im Übergangsbereich von den Seitenschenkeln (5, 6) des Y oder T zu dem Vertikalschenkel (7) des Y oder T eine Verbindungsöse (8) aufweist, zur Bildung einer Hakenverbindungseinheit (2) nach einem der Ansprüche 1 bis 6.

8. Hakenverbindungsbaugruppe (3) mit einer Hakenverbindungseinheit (2) nach einem der Ansprüche 1 bis 6 und einem Zugmittel (16), wobei das Zugmittel (16) durch Anschlagösen (9, 10) und die fluchtend angeordneten Verbindungsösen (8) der Hakenverbindungsteile (1) geführt ist.

## Claims

1. Hook connection unit (2) comprising two hook connection parts (1) which each comprise a hook (11), the hook connection parts (1) being designed such that they can be arranged on top of each other for the formation of the hook connection unit (2) in such a way that
a) the hooks (11) form a hook eye (15) having a closed edge and
b) two attachment eyes (8, 9) of the hook connection parts (1) and the hook eye (15) form a triangle,
**characterised in that**
c) the hook connection parts (1) each have an Y- or T-shaped design and
d) the hook connection parts (1)
da) each comprise the hook (11) in the region of the vertical leg (7) of the Y or T and
db) each comprise an attachment eye (9, 10) in the region of the side legs (5, 6) of the Y or T and
dc) each in the transition region of the side legs (5, 6) of the Y or T to the vertical leg (7) of the Y or T comprise a connection eye (8).

2. Hook connection unit (2) of claim 1, **characterised in that** the hook connection parts (1) have a plate-like design.

3. Hook connection unit (2) of one of the preceding claims, **characterised in that** the hook connection parts (1) are identical.

4. Hook connection unit (2) of claim 3, **characterised in that** in the hook connection unit (2) a first hook connection part (1a) is arranged in a state on the second hook connection part (1b) in which the first hook connection part (1a) has been rotated by 180° about a longitudinal axis (4) when compared to the second hook connection part (1b).

5. Hook connection unit (2) of one of the preceding claims, **characterised in that** the hook connection parts (1) are made of a thermoplastic plastic material.

6. Hook connection unit (2) of one of the preceding claims, **characterised in that** the hook connection parts (1) are manufactured in an additive FFF-process.

7. Use of a hook connection part (1) having an Y- or T-shaped design and comprising a hook (11) in the region of the vertical leg (7) of the Y or T, comprising an attachment eye (9, 10) in the region of the side legs (5, 6) of the Y or T and comprising a connection eye (8) in the transition region of the side legs (5, 6) of the Y or T to the vertical leg (7) of the Y or T for the provision of a hook connection unit (2) of one of claims 1 to 6.

8. Hook connection assembly (3) comprising a hook connection unit (2) of one of claims 1 to 6 and a traction means (16), the traction means (16) being passed through attachment eyes (9, 10) and the connection eyes (8) of the hook connection parts (1) being aligned to each other.

## Revendications

1. Unité de liaison à crochet (2) avec deux pièces de liaison à crochet (1), qui présentent chacune
un crochet (11), les pièces de liaison à crochet (1) étant conçues de telle sorte qu'elles peuvent être agencées l'une sur l'autre pour former l'unité de liaison à crochet (2) de telle sorte que
a) les crochets (11) forment un œillet de crochet fermé sur le bord (15) et
b) deux œillets de butée (8, 9) des pièces de liaison à crochet (1) et l'œillet de crochet (15) forment un triangle,
**caractérisée en ce que**
c) les pièces de liaison à crochet (1) sont chacune en forme de Y ou de T et
d) les pièces de liaison à crochet (1)
da) présentent chacune un crochet (11) dans la zone de la branche verticale (7) du Y ou du T et
db) présentent chacune un œillet de butée (9, 10) dans la zone des branches latérales (5, 6) du Y ou du T et
dc) présentent chacune un œillet de liaison (8) dans la zone de transition entre les branches latérales (5, 6) du Y ou du T et la branche verticale (7) du Y ou du T.

2. Unité de liaison à crochet (2) selon la revendication 1, **caractérisée en ce que** les pièces de liaison à crochet (1) sont en forme de plaque.

3. Unité de liaison à crochet (2) selon l'une des revendications précédentes, **caractérisée en ce que** les pièces de liaison à crochet (1) sont de conception identique.

4. Unité de liaison à crochet (2) selon la revendication 3, **caractérisée en ce que** dans l'unité de liaison à crochet (2), une première pièce de liaison à crochet (1a) est agencée sur la deuxième pièce de liaison à crochet (1b), la première pièce de liaison à crochet (1a) étant tournée à 180° autour d'un axe longitudinal (4) par rapport à la deuxième pièce de liaison à crochet (1b).

5. Unité de liaison à crochet (2) selon l'une des revendications précédentes, **caractérisée en ce que** les pièces de liaison à crochet (1) sont fabriquées dans un matériau thermoplastique.

6. Unité de liaison à crochet (2) selon l'une des revendications précédentes, **caractérisée en ce que** les pièces de liaison à crochet (1) sont fabriquées selon un procédé additif FFF.

7. Utilisation d'une pièce de liaison à crochet (1) qui est en forme de Y ou de T et qui présente un crochet (11) dans la zone de la branche verticale (7) du Y ou du T, comporte un œillet de butée (9, 10) dans la zone des branches latérales (5, 6) du Y ou du T et un œillet de liaison (8) dans la zone de transition entre les branches latérales (5, 6) du Y ou du T et la branche verticale (7) du Y ou du T, pour former une unité de liaison à crochet (2) selon l'une des revendications 1 à 6.

8. Ensemble de liaison à crochet (3) avec une unité de liaison à crochet (2) selon l'une des revendications 1 à 6 et un moyen de traction (16), le moyen de traction (16) étant guidé par des œillets de butée (9, 10) et les œillets de liaison (8) agencés des pièces de liaison à crochet (1).
